# EUROPEAN PATENT APPLICATION

(11) **EP 4 279 744 A1**
(43) Date of publication of application: **22.11.2023**
(21) Application number: 22174212.5
(22) Date of filing: 19.05.2022
(51) Int. Cl.: F04D 13/16, F04D 15/00, C02F 1/00, F04D 13/08, G01F 1/00

(54) **METHOD FOR MONITORING THE OPERATION OF A PUMP STATION**

(71) Applicant: Xylem Europe GmbH, 8200 Schaffhausen (CH)
(72) Inventor: WESSMAN, Martin, 169 40 SOLNA (SE)
(74) Representative: Brann AB

(57) **Abstract**

The invention relates to a method for monitoring the operation of a pump station (1) in order to estimate a correlation between a flooding flow [Q(flood)] brimming the pump station (1) during a flooding event and a liquid level [h] during the flooding event. The pump station (1) comprises a tank (6), an inlet (7), an outlet (8), a flooding outlet (10), a level sensor (9) and at least one pump (2). The method is characterized by the steps of monitoring the tank volume change [Q(net)], determining a pump capacity [Q(pump)] of the pump station (1), determining an inflow [Q(in)] of liquid during a time period preceding the flooding event, estimating an opening flooding flow [Q(flood)] during an opening time period of the flooding event, determining an inflow [Q(in)] of liquid during a time period succeeding the flooding event, estimating a closing flooding flow [Q(flood)] during a closing time period of the flooding event, and determining a flooding flow [Q(flood)] as a function of the liquid level [h] in the tank during the flooding event based on the estimated opening flooding flow [Q(flood)] and the estimated closing flooding flow [Q(flood)].

## Description

### Technical field of the Invention

The present invention belongs to the technical field of pump stations and methods for monitoring the operation of such pump stations, especially pump stations configured for pumping liquid comprising solid matter, such as wastewater. The pump station comprises a tank configured for temporary storage of a liquid, an inlet for influent liquid, an outlet, a flooding outlet, a level sensor and at least one pump configured for transporting the liquid away from the tank via said outlet. The pump station is in operation when the tank is capable/configured to receive liquid, both when the pump is active and inactive.

### Background of the Invention

A pump station typically has a reservoir for holding a liquid, such as a well, a sump, a holding tank or a tank. In some pump stations, there may be multiple wells/sumps that are separated from or connected to each other. One or more pumps can be used to transport liquid into or out of the reservoir. For example, pumps may be used to transport sewage out of sumps in sewage pump stations, or to pump fresh water into holding tanks in clean water boost stations.

A typical liquid reservoir for wastewater has an inlet to admit liquid to enter the tank and an outlet through which the liquid is removed/discharged from the tank. Each liquid reservoir has one or more pumps associated with the outlet. The pumps, when activated and in operation, transport the liquid, as required based on appropriate control signals. A single operator may have responsibility for many pump stations scattered over vast geographic areas, for instance the operator may have responsibility for hundreds or thousands of individual pumps and pump stations. It is known to maintain and service pumps and pump stations at regular time intervals. However, this may result in pumps that are operating within acceptable parameters being serviced when not needed, and faulty pumps not being maintained when needed, thus resulting in failure. It is also known to monitor pump operating parameters, such as the individual pump efficiency (the electrical energy required to move a fixed volume of liquid), to determine whether a pump station is operating within acceptable parameters, and normal pump station service is based on the monitored parameters. However, the pump stations operate under different conditions, i.e. different operational environments, in relation to each other and also over time.

The population of urban areas, and the presence of industries and companies, change all the time and thereby the generation of wastewater change over time in each specific area. Each wastewater transportation system, upon installation, is designed to handle a theoretical amount of wastewater. However, after installation and over time there is no good way to determine the capacity utilization or capacity shortage risk of the system and of different pump stations, there is also no optimal automatic way to decide/prioritise what part of the system and/or pump stations, that need to be upgraded or need service/maintenance.

It is always a goal when a pump station is dimensioned that a flooding of the pump station, i.e. a flow of liquid brimming the tank of pump station, during a flooding event should be avoided as far as possible. However, at the same time a too large pump station and tank provides other disadvantages, especially when too large amounts of wastewater are stored too long time in the pump station and/or stay too long time in the pump network before reaching the wastewater purification plant, such as nasty odour/stench and generation of corroding substances. Greater pump stations also entail a higher production and maintenance cost. Thus, there is a design trade-off resulting in that once and awhile a flooding event occur following an exceptionally large inflow and/or malfunctioning pumps. Aging piping on the inlet side of the pump station leading to leakage inflow, unallowably connected rainwater piping leading to surplus rain inflow, rapidly increasing urbanisation leading to higher wastewater inflow, etc. will provide a greater inflow than considered when designing/dimensioning the pump station. When a flooding event occur the flooding flow may be conveyed/directed to a large storm reservoir. Usually the storm reservoir is configured to accumulate large solid matter therein and to filtrate the smaller solid matter in the wastewater through natural sand filters and back to the environment, wherein the storm reservoir is cleaned at regular intervals from the large solid matter. The sand filter/banks may be replaced when needed, whereby the sand is cleaned/treated. In other situations/locations the flooding flow is directed directly into the nature.

Thus, flooding of a pump station is allowed under certain regulations and in a controlled manner. However, the owner of a flooded pump station has to estimate/determine the flooding volume during the flooding event. In some districts there is a government fee associated to the flooding volume and thereto a storm reservoir may have an expected capacity over time before cleaning/service of the storm reservoir.

Thus, there is a general need to be able to determine/estimate the flooding flow and flooding volume from a pump station during a flooding event.

Usually the flooding outlet is a pipe having a large cross section and/or an upwardly open channel, i.e. the flooding flow of liquid does not occupy the entire cross section of the flooding outlet making it extremely difficult or impossible to use normal flow sensors. Flow sensors capable of determining the flow in semi-filled conduits are much too complicated and expensive to be utilized in normal pump stations wherein flooding is a rare event. Such flow sensors may be used in a wastewater plant or the like, i.e. in a location constantly measuring a flow brimming a rim or the like. Thereto, in pump stations having flooding flow sensors, these sensors are rarely used and there is a risk that when they are needed, they are fouled and thereby provides faulty measuring/reading. A common method to determine/estimate the flooding volume is actually manual determination/estimation based on information on precipitation in connection with the flooding event, duration of the flooding event, experience, etc. But is has been discovered during inspections/audits that such manual determinations/estimations at best include only half the real flooding volume and often only 20-30 % of the real flooding volume.

Thus, there is a specific need to be able to determine/estimate the flooding flow and flooding volume from a pump station during a flooding event, in an accurate, reliable and cost-efficient manner.

### Object of the Invention

The present invention aims at obviating the aforementioned disadvantages and failings of previously known pump station monitoring and control systems.

A primary object of the present invention is to provide an improved method for monitoring the operation of pump stations, whereby the flooding flow and flooding volume from the pump station during a flooding event may be more accurately determined/estimated, in order to gain a better knowledge about the environmental load on the adjoining surroundings. Thereto, the knowledge about flooding flow and flooding volume from a pump station during a flooding event may be used to evaluate the size and operation of the pump station, i.e. provides tools for the operator to decide about investments in the pump station network, and reduced costs.

### Summary of the Invention

According to the invention at least the primary object is attained by means of the initially defined method for monitoring the operation of a pump station, having the features defined in the independent claim. Preferred embodiments of the present invention are further defined in the dependent claims.

According to the present invention, there is provided a method for monitoring the operation of a pump station, wherein the method comprises the steps of:
- monitoring the tank volume change [Q(net)] throughout the operation of the pump station including the flooding event,
- determining a pump capacity [Q(pump)] of the pump station throughout the operation of the pump station including the flooding event,
- determining an inflow [Q(in)] of liquid to the pump station during a time period preceding the flooding event, based on the tank volume change [Q(net)] and the pump capacity [Q(pump)] during said time period preceding the flooding event,
- estimating an opening flooding flow [Q(flood)] as a function of the liquid level [h] in the tank during an opening time period of the flooding event, based on the determined inflow [Q(in)] preceding the flooding event, and based on the pump capacity [Q(pump)] and the tank volume change [Q(net)] during said opening time period of the flooding event,
- determining an inflow [Q(in)] of liquid to the pump station during a time period succeeding the flooding event, based on the tank volume change [Q(net)] and the pump capacity [Q(pump)] during said time period succeeding the flooding event,
- estimating a closing flooding flow [Q(flood)] as a function of the liquid level [h] in the tank during a closing time period of the flooding event, based on the determined inflow [Q(in)] succeeding the flooding event, and based on the pump capacity [Q(pump)] and the tank volume change [Q(net)] during said closing time period of the flooding event,
- determining a flooding flow [Q(flood)] as a function of the liquid level [h] in the tank during the flooding event based on the estimated opening flooding flow [Q(flood)] during the opening time period of the flooding event and the estimated closing flooding flow [Q(flood)] during the closing time period of the flooding event.

Thus, the present invention is based on the insight of determining/estimating a flooding flow [Q(flood)] as a function of the liquid level [h] in the tank during the entire flooding event, no matter the cause being the origin of the flooding event, i.e. extreme inflow, malfunctioning pump(s), etc., based on data originating from time periods of the operation of the pump station that has great reliability. Thus, the present invention is intended to be used in situations where the flooding flow cannot be measured by means of conventional flow meters in an accurate, reliable and cost-efficient manner.

According to various example embodiments of the present invention the step of determining an inflow [Q(in)] of liquid to the pump station during the time period preceding the flooding event, comprises the step of adding the tank volume change [Q(net)] and the pump capacity [Q(pump)] during said time period preceding the flooding event. Thus, just before the flooding event the inflow of liquid to the tank of the pump station can be determined with accuracy based on detailed knowledge about momentary tank volume change and the momentary pump capacity.

According to various example embodiments of the present invention the step of estimating an opening flooding flow [Q(flood)] as a function of the liquid level [h] in the tank during an opening time period of the flooding event, comprises the step of subtracting the pump capacity [Q(pump)] and the tank volume change [Q(net)] during the opening time period of the flooding event, from the determined inflow [Q(in)] of liquid to the pump station during the time period preceding the flooding event. Thus, the estimation of the opening flooding flow is based on the high probability premise that the nature/characteristics of the inflow of liquid to the tank of the pump station during the time period taking place directly before the start of the flooding event is sustained also during the time period taking place directly after the start of the flooding event.

According to various example embodiments of the present invention the step of estimating a closing flooding flow [Q(flood)] as a function of the liquid level [h] in the tank during a closing time period of the flooding event, comprises the step of subtracting the pump capacity [Q(pump)] and the tank volume change [Q(net)] during the closing time period of the flooding event, from the determined inflow [Q(in)] of liquid to the pump station during the time period succeeding the flooding event. Thus, the estimation of the closing flooding flow is based on the high probability premise that the nature/characteristics of the inflow of liquid to the tank of the pump station during the time period taking place directly after the end of the flooding event was also true during the time period taking place directly before the end of the flooding event.

According to various example embodiments of the present invention the step of determining a flooding flow [Q(flood)] as a function of the liquid level [h] in the tank during the flooding event, comprises the step of determining a correlation curve function between the flooding flow [Q(flood)] brimming the pump station and a liquid level [h] in the tank during the entire flooding event, wherein the correlation curve function is in the form:
Q(flood) = c ^{∗} (h-h(flooding outlet))^e , wherein c and e are parameters, h is the liquid level in the tank and h(flooding outlet) is the height location of the flooding outlet in the tank. Other correlation curve functions are plausible.

In yet another aspect of the present invention it is provided a non-transitory computer-readable storage medium having computer-readable program code portions embedded therein, wherein the computer-readable program code portions when executed by a computer cause the computer to carry out the steps of the method according to claim 1 in order to estimate a correlation between a flooding flow [Q(flood)] brimming the pump station during a flooding event and a liquid level [h] in the tank.

Further advantages with and features of the invention will be apparent from the following detailed description of preferred embodiments.

### Brief description of the drawings

A more complete understanding of the abovementioned and other features and advantages of the present invention will be apparent from the following detailed description of preferred embodiments in conjunction with the appended drawing, wherein:
- Fig. 1: is a schematic view of an example embodiment of a pump station according to the present invention,
- Fig. 2: is a schematic illustration/graph of the liquid level in a tank of a pump station over time, including a flooding event, and
- Fig. 3: is a schematic illustration/graph of the inflow of liquid to the tank of the pump station over time, corresponding to figure 2.

### Detailed description of preferred embodiments of the invention

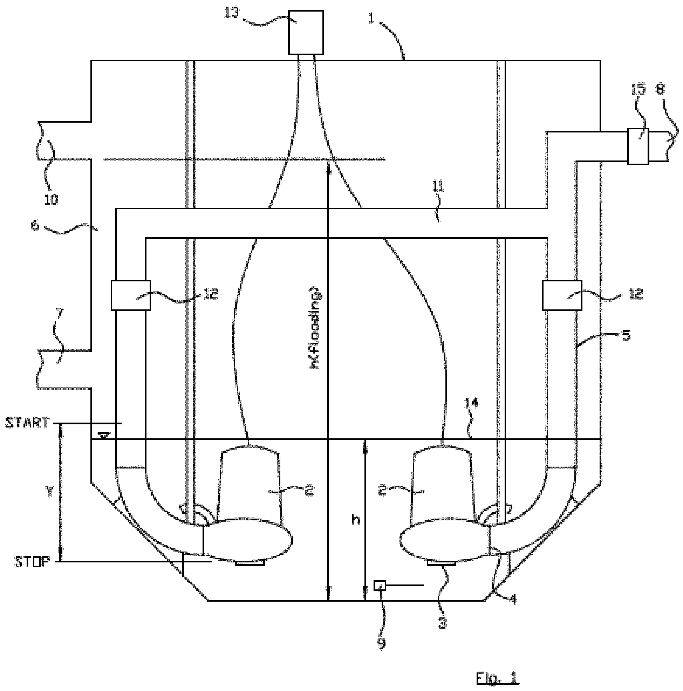

The invention is applicable to a pump station and concern monitoring and control of a pump station. Reference is initially made to figure 1 illustrating a pump station 1, e.g. a wastewater pump station, however other liquids may be pumped and the invention is not limited to wastewater.

The pump station 1 comprises at least one pump 2 having a pump inlet 3 and a pump outlet 4, an outlet pipe 5 connected to the pump 2 and extending from the pump outlet 4. The pump station 1 comprises a tank 6, also known as reservoir, sump, etc. configured for temporary storage of liquid. The pump station 1 comprises an inlet 7 for incoming/influent liquid and an outlet 8 for discharged/effluent liquid. The pump 2 is configured for transporting the liquid away from the tank 6 via the outlet pipe 5 and said outlet 8. The pump 2 is preferably located in the tank 6, and the pump 2 may be located in partly or fully submerged position or in a dry position or located in a dry position outside the tank 6.

The disclosed pump station 1 also comprises a level sensor 9 located in the tank 6 and preferably in a position always submerged when the pump station 1 is in operation, i.e. configured and intended to receive, store and discharge liquid. Thus, the level sensor 9 is preferably located below the inlet 3 of the pump 2. According to various alternative embodiments the level sensor is constituted by a dry installed level sensor, e.g. using ultrasound, radar, etc., installed above the liquid level and/or located outside the tank 6. According to various embodiments the pump station 1 comprises a plurality of level sensors, such as level switches located at different levels in the tank, e.g. pump start level and pump stop level, which will be tilted/influenced by the liquid surface. The main purpose of the level sensor 9, or level sensors, is to start and stop the pump 2 when the liquid surface is located at predetermined levels within the tank 6.

Thereto, the disclosed pump station 1 also comprises a flooding outlet 10, i.e. an outlet from the tank 6 that is used when the at least one pump 2 during operation, or due to malfunctioning of the at least one pump 2, is not able to discharge liquid at the same pace as the inflow of liquid to the pump station 1. The flooding outlet 10 is also known as brimming/overflow outlet. A flooding event may for instance refer to increased inflow of liquid to the tank 6 and/or a malfunctioning pump 2, and the flooding event is defined as the time period liquid (flooding flow) is discharged via the flooding outlet 10. The flooding outlet 10 may be in the shape of a pipe or an upwards open channel/conduit. The flooding outlet 10 is configured to have a controlled discharge of the flooding liquid, e.g. the liquid is conveyed/directed to a large storm reservoir. Usually a storm reservoir is configured to accumulate large solid matter therein and to filtrate the smaller solid matter in the wastewater through natural sand filters and back to the environment, wherein the storm reservoir is cleaned at regular intervals from the large solid matter. The flooding outlet 10 is located at a flooding liquid level [h(flooding)] in the tank 6. The flooding outlet 10 may be a pipe/conduit directly connected to the tank 6, or may be a pipe/conduit connected to the inlet pipe upstream the pump station 1.

Usually, the pump stations 1 comprises at least two pumps, wherein the second pump is used to increase the output/pump capacity of the pump station 1 when the inflow increases and/or as a backup if the first pump malfunctions and/or the plurality of pumps alternate in order to even out the load. The second pump having a pump inlet and a pump outlet, an outlet pipe 11 extending from the pump outlet and is connected to the outlet pipe 5 of the first pump 2. The pump station 1 may comprise one or more non-return valves 12 arranged to prevent the pumped flow from one of the pumps to return to the tank 6 via the other pump, and also to prevent the liquid in the outgoing piping from returning to the tank 6 when the pumps are deactivated. The plurality of pumps 2 may be of the same or different size, i.e. regarding rated power and capacity.

A local control unit 13 is operatively connected to the pumps 2 and to different sensors in the pump station 1, and may further be operatively connected to a remote/external control unit (not shown). The local control unit may by partly or fully located inside the pump 2. External outlet piping is connected to the outlet 8 of the tank 6 and the external outlet piping guides the pumped liquid for example to another pump station and/or a wastewater plant. Everything described in connection with said at least one pump 2 is applicable also for the other pumps in the pump station 1. During operation of the pump station 1 the liquid level 14 in the tank 6 will rise and fall depending on the influent liquid and the operation of the pumps 2.

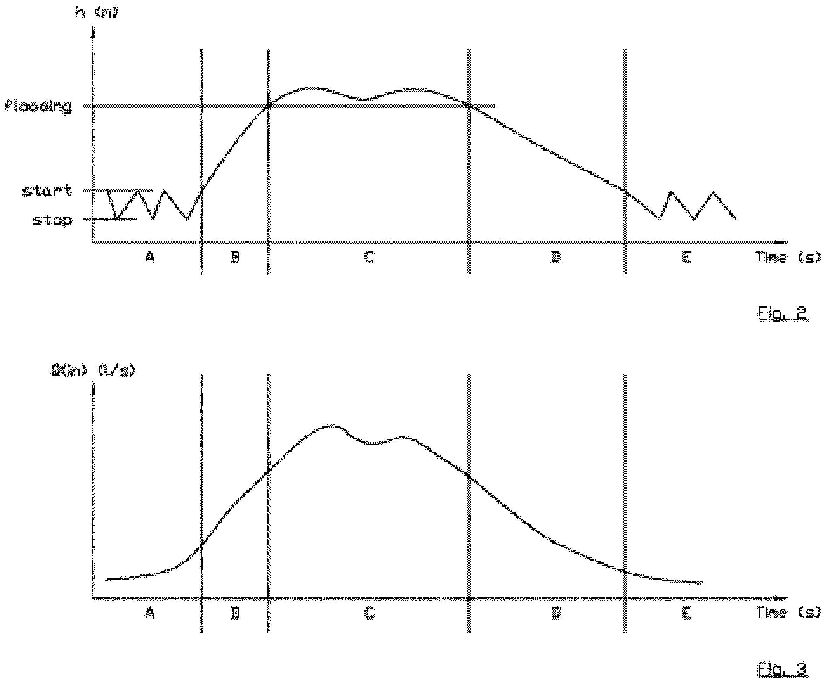

Reference is now also made to figures 2 and 3. The inventive method comprises the steps of:
- monitoring the tank volume change [Q(net)] throughout the operation of the pump station 1 including the flooding event,
- determining a pump capacity [Q(pump)] of the pump station 1 throughout the operation of the pump station 1 including the flooding event,
- determining an inflow [Q(in)] of liquid to the pump station 1 during a time period preceding the flooding event, based on the tank volume change [Q(net)] and the pump capacity [Q(pump)] during said time period preceding the flooding event,
- estimating an opening flooding flow [Q(flood)] as a function of the liquid level [h] in the tank 6 during an opening time period of the flooding event, based on the determined inflow [Q(in)] preceding the flooding event, and based on the pump capacity [Q(pump)] and the tank volume change [Q(net)] during said opening time period of the flooding event,
- determining an inflow [Q(in)] of liquid to the pump station 1 during a time period succeeding the flooding event, based on the tank volume change [Q(net)] and the pump capacity [Q(pump)] during said time period succeeding the flooding event,
- estimating a closing flooding flow [Q(flood)] as a function of the liquid level [h] in the tank during a closing time period of the flooding event, based on the determined inflow [Q(in)] succeeding the flooding event, and based on the pump capacity [Q(pump)] and the tank volume change [Q(net)] during said closing time period of the flooding event,
- determining a flooding flow [Q(flood)] as a function of the liquid level [h] in the tank during the flooding event based on the estimated opening flooding flow [Q(flood)] during the opening time period of the flooding event and the estimated closing flooding flow [Q(flood)] during the closing time period of the flooding event.

It shall be pointed out that the actual determination of the flooding flow takes place after the flooding event has ended and preferably when normal operation of the pump station 1 is resumed, i.e. at the end of time period D or during time period E in the figures. Thus, all necessary data is monitored throughout the operation of the pump station 1 and thereafter the inventive method is finalized.

The tank volume change [Q(net)] demonstrate/indicate the addition of liquid volume to or removal of liquid volume from the tank 6, i.e. quantified as volume per time unit, such as liters per second. Thus, the tank volume change [Q(net)] is ΔV/Δt or dV/dt. A positive tank volume change corresponds to increased liquid volume in the tank 6, i.e. that the liquid level [h] 14 in the tank 6 increases/rises, and a negative tank volume change corresponds to decreased liquid volume in the tank 6, i.e. that the liquid level [h] in the tank decreases/drops. The tank volume change is monitored/determined using the level sensor 9. According to various embodiments, the wall of the tank 6 may be considered to be more or less uniform and thereby the cross-sectional area of the tank 6 is considered constant. Thus, the tank volume change is the constant cross sectional area times the change in liquid level [h]. Thus, a specific vertical distance equals a specific liquid volume at all liquid levels in the tank 6, at least at liquid levels located above the pump start liquid level that is used during normal operation. In such situations the tank volume change [Q(net)] may be considered as A^{∗}Δh/Δt or A^{∗}dh/dt. According to various embodiments, the wall of the tank 6 cannot be considered uniform and thereby the cross-sectional area of the tank 6 can be determined as a function of the liquid level [h] in the tank 6. Thus, the tank volume change is the change in liquid level [h] times the cross-sectional area of the tank at said liquid level [h]. In such situations the tank volume change [Q(net)] may be considered as A(h)^{∗}Δh/Δt or A(h)^{∗}dh/dt. By using one of or a combination of these two alternatives, the level sensor 9 is used to determine/monitor the tank volume change [Q(net)] by determining/monitoring the change in liquid level [h].

The pump capacity [Q(pump)] of the pump station 1 is the amount of liquid that is transported from or through the pump station 1, i.e. also known as pump flow, quantified as volume per time unit, such as liters per second. The pump capacity is dependent on the utilized capacity of the different pumps, outlet piping diameters, and the wear and overall condition of pumps and piping. Most pumps 2 has a rated/theoretical capacity that is greater than the actual pump capacity of the pump 2 when operated in the specific pump station 1. Thus, in connection with a flooding event the pump capacity of the pump station 1 may alter, i.e. starting with one active pump 2 and thereafter activating additional pumps, and thereafter operating all active pumps at maximum operational speed. According to various embodiments, the step of determining the pump capacity [Q(pump)] of the pump station 1 for each time unit throughout the operation of the pump station 1 is performed using a flowmeter 15 connected to the outlet 8 of the pump station 1. Thus, for each time unit/period the pump station 1 may have different sets of available pumps 2 that are active, and provided with information about which pumps 2 that are active and at what operational speed, the momentary pump capacity of the pump station 1 is determined.

The inflow [Q(in)] of liquid to the pump station 1 is the amount of liquid that enters the tank 6, quantified as volume per time unit, such as litres per second. When no pumps 2 are active the inflow [Q(in)] of liquid to the pump station 1 is equal to the tank volume change [Q(net)], and when one or more pumps 2 are active, the inflow [Q(in)] of liquid to the pump station 1 is equal to the tank volume change [Q(net)] plus the momentary pump capacity [Q(pump)].

According to various embodiments, as an alternative of using an outlet flowmeter 15, the pump capacity [Q(pump)] of the pump station 1 is determined during a time period of normal operation of the pump station 1, i.e. during time period A and/or time period E in the figures. Normal operation of the pump station 1 entails that the pump(s) 2 is started when the liquid level [h] reaches the pump start liquid level and thereafter the pump(s) 2 is stopped when the liquid level [h] reaches the pump stop liquid level. Such determination comprises the steps of:
- determining the inflow [Q(in)] of liquid to the pump station 1 during normal operation of the pump station 1 and during a time period no pump 2 is active, wherein the inflow [Q(in)] of liquid to the pump station 1 is equal to the tank volume change [Q(net)], and
- determining the pump capacity [Q(pump)] during normal operation of the pump station 1 by subtracting the tank volume change [Q(net)] from the determined inflow [Q(in)] of liquid to the pump station 1 during normal operation of the pump station 1 and during a time period all available pumps 2 are active.

These two steps shall be performed in close connection with each other, preferably during the same pump cycle, such that the inflow of liquid may be considered constant when no pump is active and when all available pumps are active. Said two steps are preferably performed distanced from the pump activation and the pump deactivation, since in close connection with the pump activation there is some time (seconds/minutes) until the pump and thereby the liquid in the outlet pipe have reached a steady state. In the middle portion between the pump start liquid level and pump stop liquid level the pump(s) operate in a steady state and the output liquid are stable/steady and thereby the best reading/monitoring takes place.

During the time period preceding the flooding event, i.e. when the liquid level [h] increases despite all available pumps 2 are active, the inflow [Q(in)] of liquid to the pump station 1 is equal to the tank volume change [Q(net)] plus the momentary pump capacity [Q(pump)] that is valid during said time period preceding the flooding event, i.e. the time period B in the figures and especially the end of time period B in the figures. The next step of the inventive method is based on the premise that the nature/characteristics of the inflow [Q(in)] of liquid preceding the flooding event remains also during the opening time period of the flooding event, i.e. during the start of time period C in the figures. The opening time period of the flooding event may be determined as a fixed time starting from the start of the flooding event, e.g. 5-15 minutes, and/or may be determined as a fixed liquid level height above the flooding liquid level, e.g. 5-10 centimetres. Based on said premise, the opening flooding flow [Q(flood)] as a function of the liquid level [h] in the tank 6 during the opening time period of the flooding event can be estimated. Thus, the opening flooding flow [Q(flood)] is obtained by subtracting the pump capacity [Q(pump)] and the tank volume change [Q(net)] during the opening time period of the flooding event, from the determined inflow [Q(in)] of liquid to the pump station during the time period preceding the flooding event. The tank volume change [Q(net)], i.e. the liquid level increase, will decrease drastically when the liquid starts to leave via the flooding outlet 10.

During the time period succeeding the flooding event, i.e. when the liquid level [h] starts to decrease and no liquid leaves the tank via the flooding outlet 10, the inflow [Q(in)] of liquid to the pump station 1 is equal to the tank volume change [Q(net)] plus the momentary pump capacity [Q(pump)] that is valid during said time period succeeding the flooding event, i.e. the time period D in the figures and especially the first part of time period D in the figures. Please note that the tank volume change at this stage is negative since the liquid level in the tank decreases. The next step of the inventive method is based on the premise that the nature/characteristics of the inflow [Q(in)] of liquid succeeding the flooding event was also applicable during the closing time period of the flooding event, i.e. during the end of time period C in the figures. The closing time period of the flooding event may be determined as a fixed time extending backwards from the termination of the flooding event, e.g. 30-120 minutes, and/or may be determined as a fixed liquid level height above the flooding liquid level, e.g. 5-10 centimetres. Based on said premise, the closing flooding flow [Q(flood)] as a function of the liquid level [h] in the tank 6 during the closing time period of the flooding event can be estimated. Thus, the closing flooding flow [Q(flood)] is obtained by subtracting the pump capacity [Q(pump)] and the tank volume change [Q(net)] during the closing time period of the flooding event, from the determined inflow [Q(in)] of liquid to the pump station during the time period succeeding the flooding flooding flow [Q(flood)].

During the flooding event the nature/characteristics of the inflow of liquid to the tank will change/vary, starting from the estimated opening flooding flow [Q(flood)] as a function of the liquid level [h] in the tank 6 at the start of the flooding event and ending with the estimated closing flooding flow [Q(flood)] as a function of the liquid level [h] in the tank 6 at the end of the flooding event. The central understanding of the invention is that the nature/characteristics of the inflow of liquid during the intermediate time period of the flooding event is unknown and cannot be measured/determined. The invention is based on the understanding/finding that there is a correlation between the flooding flow [Q(flood)] and the liquid level [h] above the flooding outlet 10. Based on the estimated opening flooding flow [Q(flood)] as a function of the liquid level [h] in the tank 6 and the estimated closing flooding flow [Q(flood)] as a function of the liquid level [h] in the tank 6, which provides good accuracy, a correlation for all possible liquid levels [h] in the tank and a corresponding flooding flow [Q(flood)] can be determined, i.e. a flooding flow [Q(flood)] as a function of the liquid level [h] in the tank during the flooding event. For instance, by means of curve adaptation and extrapolation.

The result of the inventive method, i.e. flooding flow [Q(flood)] as a function of the liquid level [h], may be used to determine a flooding volume [V(flood)] during the flooding event, i.e. by summarizing the momentary flooding flow [Q(flood)] over the entire flooding event.

The step of determining the flooding flow [Q(flood)] as a function of the liquid level [h] in the tank during the flooding event, preferably comprises the step of determining a correlation curve function between the flooding flow [Q(flood)] brimming the pump station 1 and a liquid level [h] in the tank 6 during the entire flooding event. This is performed by merging the estimated flooding flow [Q(flood)] as a function of the liquid level [h] in the tank during the opening time period of the flooding event and the estimated flooding flow [Q(flood)] as a function of the liquid level [h] in the tank during the closing time period of the flooding event.

The correlation curve function is preferably in the form Q(flood) = c ^{∗} (h-h(flooding outlet))^e , wherein c and e are parameters, h is the liquid level in the tank 6 and h(flooding outlet) is the height location of the flooding outlet 10 in the tank 6. The parameters c and e are provided from the merge of the estimated opening flooding flow [Q(flood)] and the estimated closing flooding flow [Q(flood)].

A non-transitory computer-readable storage medium having computer-readable program code portions embedded therein, wherein the computer-readable program code portions when executed by a computer cause the computer to carry out the steps of the inventive method in order to estimate a correlation between a flooding flow [Q(flood)] brimming the pump station 1 during a flooding event and a liquid level [h] in the tank 6.

### Feasible modifications of the Invention

The invention is not limited only to the embodiments described above and shown in the drawings, which primarily have an illustrative and exemplifying purpose. This patent application is intended to cover all adjustments and variants of the preferred embodiments described herein, thus the present invention is defined by the wording of the appended claims and the equivalents thereof. Thus, the equipment may be modified in all kinds of ways within the scope of the appended claims.

Throughout this specification and the claims which follows, unless the context requires otherwise, the word "comprise", and variations such as "comprises" or "comprising", will be understood to imply the inclusion of a stated integer or steps or group of integers or steps but not the exclusion of any other integer or step or group of integers or steps.

## Claims

1. Method for monitoring the operation of a pump station (1) having a tank (6) in order to estimate a correlation between a flooding flow [Q(flood)] brimming the pump station (1) during a flooding event and a liquid level [h] in the tank (6) during the flooding event, wherein the tank (6) of the pump station (1) is configured for temporary storage of a liquid, and the pump station (1) thereto comprises an inlet (7) for influent liquid, an outlet (8), a flooding outlet (10), a level sensor (9) and at least one pump (2) configured for transporting the liquid away from the tank (6) via said outlet (8),
the method being **characterized by** the steps of:
- monitoring the tank volume change [Q(net)] throughout the operation of the pump station (1) including the flooding event,
- determining a pump capacity [Q(pump)] of the pump station (1) throughout the operation of the pump station (1) including the flooding event,
- determining an inflow [Q(in)] of liquid to the pump station (1) during a time period preceding the flooding event, based on the tank volume change [Q(net)] and the pump capacity [Q(pump)] during said time period preceding the flooding event,
- estimating an opening flooding flow [Q(flood)] as a function of the liquid level [h] in the tank (6) during an opening time period of the flooding event, based on the determined inflow [Q(in)] preceding the flooding event, and based on the pump capacity [Q(pump)] and the tank volume change [Q(net)] during said opening time period of the flooding event,
- determining an inflow [Q(in)] of liquid to the pump station (1) during a time period succeeding the flooding event, based on the tank volume change [Q(net)] and the pump capacity [Q(pump)] during said time period succeeding the flooding event,
- estimating a closing flooding flow [Q(flood)] as a function of the liquid level [h] in the tank (6) during a closing time period of the flooding event, based on the determined inflow [Q(in)] succeeding the flooding event, and based on the pump capacity [Q(pump)] and the tank volume change [Q(net)] during said closing time period of the flooding event,
- determining a flooding flow [Q(flood)] as a function of the liquid level [h] in the tank during the flooding event based on the estimated opening flooding flow [Q(flood)] during the opening time period of the flooding event and the estimated closing flooding flow [Q(flood)] during the closing time period of the flooding event.

2. The method according to claim 1, wherein the step of determining an inflow [Q(in)] of liquid to the pump station (1) during the time period preceding the flooding event, comprises the step of adding the tank volume change [Q(net)] and the pump capacity [Q(pump)] during said time period preceding the flooding event.

3. The method according to claim 1 or 2, wherein the step of estimating an opening flooding flow [Q(flood)] as a function of the liquid level [h] in the tank (6) during an opening time period of the flooding event, comprises the step of subtracting the pump capacity [Q(pump)] and the tank volume change [Q(net)] during the opening time period of the flooding event, from the determined inflow [Q(in)] of liquid to the pump station (1) during the time period preceding the flooding event.

4. The method according to any of claims 1-3, wherein the step of determining an inflow [Q(in)] of liquid to the pump station (1) during the time period succeeding the flooding event, comprises the step of adding the tank volume change [Q(net)] and the pump capacity [Q(pump)] during said time period succeeding the flooding event.

5. The method according to any preceding claim, wherein the step of estimating a closing flooding flow [Q(flood)] as a function of the liquid level [h] in the tank (6) during a closing time period of the flooding event, comprises the step of subtracting the pump capacity [Q(pump)] and the tank volume change [Q(net)] during the closing time period of the flooding event, from the determined inflow [Q(in)] of liquid to the pump station (1) during the time period succeeding the flooding event.

6. The method according to any preceding claim, wherein the step of determining a flooding flow [Q(flood)] as a function of the liquid level [h] in the tank during the flooding event, comprises the step of determining a correlation curve function between the flooding flow [Q(flood)] brimming the pump station (1) and a liquid level [h] in the tank (6) during the entire flooding event, by merging the estimated flooding flow [Q(flood)] as a function of the liquid level [h] in the tank during the opening time period of the flooding event and the estimated flooding flow [Q(flood)] as a function of the liquid level [h] in the tank during the closing time period of the flooding event.

7. The method according to claim 6, wherein the correlation curve function is in the form Q(flood) = c ^{∗} (h-h(flooding outlet))^e , wherein c and e are parameters, h is the liquid level in the tank (6) and h(flooding outlet) is the height location of the flooding outlet (10) in the tank (6).

8. The method according to any preceding claim, wherein the step of determining the pump capacity [Q(pump)] of the pump station (1) is performed using a flowmeter (15) connected to the outlet (8) of the pump station (1).

9. The method according to any of claims 1-7, wherein the pump capacity [Q(pump)] of the pump station (1) is determined during a time period of normal operation of the pump station (1).

10. The method according to claim 9, wherein the determination of the pump capacity [Q(pump)] of the pump station (1) comprises the steps of:
- determining the inflow [Q(in)] of liquid to the pump station (1) during normal operation of the pump station (1) and during a time period no pump (2) is active, wherein the inflow [Q(in)] of liquid to the pump station (1) is equal to the tank volume change [Q(net)], and
- determining the pump capacity [Q(pump)] during normal operation of the pump station (1) by subtracting the tank volume change [Q(net)] from the determined inflow [Q(in)] of liquid to the pump station (1) during normal operation of the pump station (1) and during a time period all available pumps (2) are active.

11. A non-transitory computer-readable storage medium having computer-readable program code portions embedded therein, wherein the computer-readable program code portions when executed by a computer cause the computer to carry out the steps of the method according to claim 1 in order to estimate a correlation between a flooding flow [Q(flood)] brimming the pump station (1) during a flooding event and a liquid level [h] in the tank (6).
